# EUROPEAN PATENT SPECIFICATION

(11) **EP 4 397 393 B1**
(45) Date of publication and mention of the grant of the patent: **30.04.2025**
(21) Application number: 23215555.6
(22) Date of filing: 11.12.2023
(51) Int. Cl.: B01D 53/34, C04B 7/36, C04B 7/43, C04B 7/47, F27D 17/00

(54) **ELECTRICALLY HEATED GAS MIXTURE MEDIATED FOSSIL FUEL FREE INDUSTRIAL PLANT PROCESSES**
DURCH ELEKTRISCH BEHEIZTES GASGEMISCH VERMITTELTE VERFAHREN FÜR INDUSTRIELLE ANLAGEN OHNE FOSSILEN BRENNSTOFF
PROCÉDÉS INDUSTRIELS D'USINES EXEMPTES DE COMBUSTIBLE FOSSILES À MÉDIATION PAR UN MÉLANGE GAZEUX CHAUFFÉ ÉLECTRIQUEMENT

(30) Priority: 13.12.2022 IN 202221072024
(43) Date of publication of application: 10.07.2024
(73) Proprietor: Tata Consultancy Services Limited, Maharashtra (IN)
(72) Inventor: DHAYAL, Akanksha, 411013 Pune (IN); SUHAIL, Mohammed, 411013 Pune (IN); SUBRAMANIAN, Sivakumar, 411013 Pune (IN); RUNKANA, Venkataramana, 411013 Pune (IN)
(74) Representative: Goddar, Heinz J.

(56) References cited:
- EP-A1- 4 011 850
- EP-B1- 3 074 360

## Description

### TECHNICAL FIELD

The embodiments herein generally relate to the field of fossil fuel free approaches for industrial plant processes and, more particularly, to a system and method for electrically heated gas mixture mediated industrial plant processes providing a fossil fuel free approach.

### BACKGROUND

Majority of greenhouse gas emissions come directly from industrial sources, such as manufacturing, food processing, mining, and construction. On-site combustion of fossil fuels for heat and power, non-energy use of fossil fuels, and chemical processes used in iron, steel, and cement production result in direct emissions of greenhouse gases. Fossil fuels are the largest source of air pollution emissions globally. Thus, providing non-fossil fuel-based approaches to limit greenhouse gas emissions during operation of industrial processes as Carbon- dioxide (CO2) is one of the major contributors of global warming is the need of the hour. Industry plants for metal extraction from ores, cement manufacturing and the like are major industries that need to manage the greenhouse emissions.

For example, the cement industry is classified as a hard-to-abate industry from the decarbonization perspective due to its reliance on fossil fuels and the inherent release of Carbon dioxide (CO2) from limestone during calcination. Fossil fuel is used in the process to supply the energy needed for raising the temperature of the raw material (sensible heat) to the desired level and to provide the required energy for completing the endothermic reactions. Thus, in the conventional cement manufacturing process, CO2 is generated due to the burning of the fossil fuel and calcination reaction that occurs in the calciner and rotary kiln. While the emissions from the cement industry are relatively very rich in CO2 (~30 volume percent), it would still require significant investments for the installation of carbon capture facilities before it can be separated and sequestered or utilized. The industry has been depending on coal or more recently pet-coke as the energy source. To mitigate the emissions of carbon footprint, some of the plants supplement the use of coal or pet-coke with alternate fuels such as plastics, tires, and municipal wastes. The use of pet-coke also poses a significant challenge in terms of sulfur-related emissions. The residual products (ash) from the combustion make the quality monitoring in cement clinker critical. Further, depending on their composition, they may aggravate the operational challenges like volatile handing and ring formation in the rotary kilns. It is estimated that the cement industry is responsible for nearly 8 percent of the overall CO2 emissions.

Any effort to mitigate this and weaning this industry from the use of fossil fuel shall bear significant benefits. Attempts have been made to manage CO2 emissions, specifically in cement industry. Recent works still in research phase propose usage of Thermal Energy Storage (TES) system for required energy storage and heating of the CO2 for circulation of heat by handling CO2 release in the cement process. However, the existing approach also relies on usage of flue gases for preheaters, which requires that the calciner loop be maintained separately from the flue gas loop. It could pose challenges to avoid mixing of these gaseous streams. Further, they do not completely eliminate use of fossil fuels rather partially use flue gas or fossil fuel in the cement manufacturing process. Additional TES component increases cost of the manufacturing plant require changes to current manufacturing plants and increases manufacturing costs. The complete elimination of release of CO2 into environment by managing CO2 generated during calcination and CO2 generated from fossil fuels has hardly been addressed. Moreover, providing an implementable CO2 management solution with minimal changes to existing plant set ups is a technical challenge to be addressed.

EP 4 011 850 A1 discloses a method of producing clinker from cement raw meal, comprising the steps of:- preheating cement raw meal in a preheater string, said preheater string comprising a plurality of preheater stages,- pre-calcining preheated raw meal in a pre-calciner to obtain a pre-calcined product,- introducing the pre-calcined product into a rotary kiln for calcining the pre-calcined product to obtain cement clinker, wherein a partial flow of at least partly preheated raw meal is diverted from the preheater string, introduced into a calcination device and at least partially decarbonated in the calcination device in order to obtain an at least partially decarbonated product and CO2, wherein the calcination device is heated by electrical energy, and wherein the at least partially decarbonated product is fed into the rotary kiln and the CO2 is drawn off from the calcination device.

EP 3 074 360 B1 discloses a process for producing portland cement clinker from at least crushed limestone and crushed sand including the steps of: Mixing the limestone, and the sand to form a mixed powder; calcining the mixed powder in a calciner reactor, wherein the calciner reactor is adapted to apply indirect heat generated from the combustion of a first fuel input to produce the mixed powder, and wherein the calciner reactor pre-heats the mixed power in a first segment, and reacts the pre-heated powder in a second segment to generate a first gas stream of carbon dioxide from the calcination of limestone and a separate second gas stream from the combustion of the first fuel input and a stream from the mixed powder; Introducing the calcined mixed powder into a kiln using direct heating to produce Portland cement clinker, where the kiln is fueled by the combustion of a second fuel input mixed with air that is pre-heated by hot Portland cement clinker exiting the kiln.

### SUMMARY

Embodiments of the present disclosure present technological improvements as solutions to one or more of the above-mentioned technical problems recognized by the inventors in conventional systems. In one embodiment a method for electrically heated gas mixture mediated industrial plant processes is provided. The invention is set out in the appended set of claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an architecture of a system for electrically heated gas mixture mediated industrial plant processes providing a fossil fuel free approach, in accordance with some embodiments of the present disclosure.
FIG. 2A illustrates the system for electrically heated gas mixture mediated industrial plant processes for a cement manufacturing plant in a counter current mode operation with example heat and flowrate values of a heating medium made up of gas mixture, in accordance with some embodiments of the present disclosure.
FIG. 2B illustrates the system for electrically heated gas mixture mediated industrial plant processes for the cement manufacturing plant in a cocurrent mode operation, in accordance with some embodiments of the present disclosure.
FIG. 3A through FIG. 8 illustrates units of system of FIG. 2A and 2B for inert gas based direct heating for the industrial plant process, in accordance with some embodiments of the present disclosure.
FIG. 9 is a functional block diagram of a controller that controls a temperature and a flow rate of the heating medium electrically heated gas mixture mediated industrial plant processes of system of FIG. 2A and 2B, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Embodiments herein provide a system for electrically heated gas mixture mediated industrial plant processes providing a fossil fuel free approach. The system utilizes a gas mixture as heating medium that directly transfers heat to a raw material required for processing the raw material into an end or an intermediate product. The gases used as the heating medium may be generated as byproduct during processing, gaseous reactants needed for processing, or a combination of stable gases that are reutilized and recirculated to carry heat and dissipate the heat at various stages of processing in accordance with a heating medium flow loop. The heating medium flow loop disclosed is designed such that it eliminates the need of heat management equipment like a Thermal Energy Storage (TES) system used by existing approaches, as electric energy is directly converted to the heat energy and passed on to the circulating gas. Entire heating of the plant is carried out using electric gas heaters heated using renewable electric sources to provide the fossil fuel free design. Furthermore, the system disclosed herein also avoids the use of two heat exchangers that that are required in the TES based approaches in the art for the indirect heating of CO2 from the calciner using the flue gas. This would be a high temperature heat exchanger that can run up the cost of the installation significantly as hot side temperature can be more than 1000-12000C.

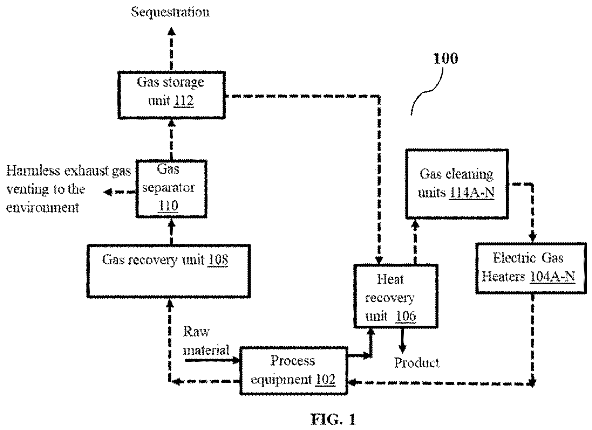

Referring now to the drawings, and more particularly to FIGS. 1 through 9, where similar reference characters denote corresponding features consistently throughout the figures, there are shown preferred embodiments and these embodiments are described in the context of the following exemplary system and/or method.

FIG. 1 illustrates an architecture of a system 100 for electrically heated gas mixture mediated industrial plant processes providing a fossil fuel free approach, in accordance with some embodiments of the present disclosure. The architecture of the system 100 depicted in FIG. 1 is applicable for a multitude of industrial plant processes Examples of electrically heated gas mixture mediated industrial plant processes, are discussed below, wherein cement manufacturing plant system design is detailed for better understanding of implementation of system 100. Other industrial applications of this approach can be calcination of alumina, direct reduction of iron ores, calcination of limestone, etc. The process may be carried out in different contact equipment, such as rotary kilns, fixed bed reactor, moving bed reactor, or fluidized bed reactor. The specific requirements of a particular industrial plant may need minimal changes to the main system design and fall within the scope of the electrically heated gas mixture mediated industrial plant processes disclosed herein by the general architecture of the system 100. Also as understood, number of electric gas heaters, gas cleaning units and other units may vary based on the plant process.

As depicted in FIG.1, the system 100 comprises a process equipment 102, a heat recovery unit 106, a plurality of electric gas heaters 104 A-N, a gas recovery unit 108, a gas separator 110, a gas storage unit 112 and a plurality of gas cleaning units 114 A-N. The process equipment 102 facilitates processing of a raw material for obtaining a product. The heat required for processing the raw material is derived from a gas used as a heating medium, wherein the gas is heated electrically to a predefined temperature and the heat from the gas is transferred directly to the raw material through direct contact. The raw material may be solid state or liquid state based on type of the industrial plant. The gas identified as heating medium is either chemically inactive or participates in the reactions during processing of the raw material. The gases can be at least one of: (i) involved in the processing of the raw material as a reactant and/or a byproduct and (ii) an externally introduced stable gas, or a gas mixture thereof. As understood by person having ordinary skill in the art, the gas, the processing equipment, the raw material, and the product vary based on industrial plant process under consideration.

A plurality of electric gas heaters 104A-N, powered preferably with renewable electricity source heat the gas or gas mixture to the predefined temperature. The preheating of the gas is performed at a heat recovery unit 106, wherein the heat released by the heat recovery unit during cooling of the product exiting the processing equipment is utilized to raise temperature of the gas. The heating medium flow design loop comprising of the plurality of electric gas heaters reutilizes the heat carrying capacity of the gas by recirculation and eliminates need for storing heat energy from the gas, unlike the TES systems used by few existing methods. A plurality of gas cleaning units 114A-N clean the gas before the gas enters the plurality of electric gas heaters 104A-N. An optional gas recovery unit 108 to recover the gas exiting the processing equipment followed by a gas separator 110 to separate out solid particles before venting out non-harmful gases to the environment. A gas storage unit 112 to store the gas exiting the gas separator 110. The stored gas is recirculated as a heating medium in the heating medium flow design loop and excess gas is forwarded for sequestration for longer term storage or utilization.

The gas storage unit 112 includes a hollow steel tank. In this unit harmful gas is pumped and stored. This storage is used to store the excess gas from process equipment unit in the circuit. Some amount of gas is extracted from this gas storage unit 112 and sent to the heat recovery unit as the heating medium, interchangeably referred to hereinafter as heating medium, to start the plant operation after shutdown or periodic maintenance. The gas cleaning units 114A-N, such as cyclone separators, are used to purify the heat carrier medium coming from different units. The cleaned heat carrier medium is sent to the next corresponding electrical gas heaters 104A-N. The heat carrier medium may be preheated by the product coming out from the process equipment in heat recovery unit and sent to gas cleaning unit. In the electric gas heaters 104A-N, heat is transferred to the heat carrier medium by convection and radiation heat transfer modes. The heat carrier medium from gas cleaning unit is fed into the electric gas heaters 104A-N as input, and the heat carrier medium at high temperature, from the electric gas heaters 104A-N is fed to the process equipment unit 102.

The process equipment unit 102 could be any industrial equipment utilizing heat from gaseous medium via direct or indirect mode to accomplish the process objective. The heat carrier medium from electric gas heaters unit is fed to process equipment unit 102 as input. This provides the required energy supply to the material stream to execute the process reactions or physical transformations. The raw material receives the necessary heat from the heat carrier medium stream as they move forward. The byproduct gas (if any) within the process equipment unit 102 is added to the heat carrier medium stream while flowing through one end to another. The product is discharged from process equipment unit 102 and sent to heat recovery unit 106 when all process reaction is completed to the required product or an intermediate product.

The gas recovery unit 108 comprises of a container, different stream of heat carrier medium could be mixed in case of multiple similar system have been employed in parallel. The output from the gas recovery unit is sent to the gas separator unit. The gas recovery unit 108 is optional depending upon the use case. These units may also serve as preheating units transferring the heat in the exhaust gases to the feed solids (raw materials). The gas separator unit 110 includes different separator equipment based on the mixture of gases as input to the unit. The separation of harmful gases accomplished in this unit and harmless gases (no-harmful gases) exhaust to the atmosphere. Harmful gases (after separation) are sent to the gas storage unit or sequestration for longer term storage or for future use.

Provided here are few examples that can adapt to electrically heated gas mixture mediated industrial plant processes, as disclosed herein. A rotary kiln for alumina production from aluminum trihydrate precipitate that uses hot combustion gases when adapted to electrically heated gas mixture mediated industrial plant processes is explained below. The combustion gases must be heated to approx. 1300 degrees Celsius before entering the rotary kiln. All of the steps in the alumina process, including dehydration of the feed and endothermic decomposition of the feed via reactions, are completed by supplying heat to the raw material in the process unit via heated gases. In the conventional method, the heating of the gases is accomplished by burning the fossil fuel, such as natural gas in the rotary kiln or in separate chambers and supplying only the combustion gases. By utilizing the system 100 as described above, the required amount of the heating media/inert gas mixture from the storage unit is sent to the heat recovery unit to recover heat via heat transfer between the heating media and product at the discharge end. Preheated heating media is forwarded to the gas cleaning unit, which is then followed by the electric heating unit, which supplies the required heat to achieve the temperature, and heated heating media is forwarded to the processing unit.. The heating media will exit from the processing unit and sent to the gas separator unit where heating media get purified and then sent to the storage unit for further circulation in the process. The purification step may involve removal of moisture produced by the calcination of trihydrate. In this system, N2 or air can be used as an inert heating media.

Referring now to design of the system 100 for the cement manufacturing plant or dry cement clinker, conventionally in modern dry cement clinker production based on a dry process, pulverized fuel is burnt inside a rotary kiln and pre-calciner to provide the required thermal energy. The system 100 disclosed herein utilizes electric energy to generate heat to be supplied to a rotary kiln and a pre-calciner unit of the cement manufacturing process.

In the example cement plant, a stable gas mixture comprising a plurality of inert gases is used as a heating medium, wherein CO2 generated as a byproduct of endothermic reaction in rotary kiln is one of the major component of the inert gases (stable gas mixture). The CO2, which is a stable or inert gas does not interfere or react with the material being processed at the industrial plant. Moreover, CO2 reuse avoids the need for an expensive carbon capture facility. The stable gas mixture, interchangeably referred to hereinafter as heating medium, is s heated or reheated electrically and passed through the rotary kiln/pre-calciner, and preheaters unlike combusting pulverized coal in the kiln/pre-calciner as used by any conventional rotary kiln. The CO2 released from the calcination reactions mixes with the heating medium. If the original heating medium itself is CO2, the released CO2 from the calcination process adds to it. Thus, major component of the heating medium is the CO2, the byproduct of the calcination and clinkerization excluding any minor emissions from raw material or air entrained in a cooler unit of the plant. The system enables the sequestration or utilization of CO2 more attractive. The system has two modes of implementation, a counter current mode and a cocurrent mode based on flow of heating medium in the rotary kiln. With elimination of fossil fuel combustion in the system disclosed herein, the extra length required for burning the fossil fuel in the rotary kiln may be reduced or may result in improved throughput for existing rotary kilns and may help make-up for the reduced kinetics due to the reversible reactions in the presence of CO2.

Electric heaters, as provided by the system disclosed herein, heat the heating medium continuously to provide the heat through heating media in the calciner and rotary kiln. Direct heating utilized in electric heaters by heating elements unlike heating a solid bed first then using that heat to heat the flowing fluid as mentioned in some of the existing methods. Using solid bed heat adds constraint in the flow rate of CO2 as it is not continuously heated. After some time, the solid bed temperature is bound to reduce, thus maintaining sufficient temperature in the bed or calciner can become a challenge. Further, the high electricity demand of the system disclosed herein is sourced preferably from renewable power supply such as solar energy to eliminate carbon emissions and provide fossil fuel free industrial heating approach.

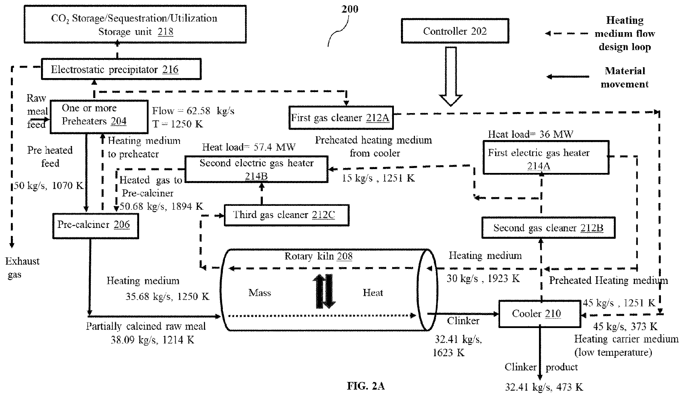

FIGS. 2A through 9 further explain the electrically heated gas mixture mediated industrial plant processes for the cement manufacturing plant.

FIG. 2A is the system 100 depicting a cement clinker circuit 200 for electrically heated gas mixture mediated industrial plant processes for a cement manufacturing plant in a counter current mode operation with example flow rate and temperature values of a heating medium made up of gas mixture, in accordance with some embodiments of the present disclosure. The example system 100 comprises a cement rotary kiln circuit 200 comprising several unit operations including the processing equipment 102 comprising a pre-calciner 206 and rotary kiln 208. The cement rotary kiln circuit 200 further comprising a gas recovery unit 108, functioning as one or more preheaters 204, to obtain a preheated feed from the raw material comprising a raw meal feed entering the one or more preheaters. The cement rotary kiln circuit 200 further comprising the pre-calciner 206 for calcination of the preheated feed to obtain a partially calcined raw meal, the rotary kiln 208 for clinkerization to obtain the product in the form of a clinker from the partially calcined raw meal, and the heat recovery unit 106 in form of a cooler 210 to obtain the product in form of a clinker product by cooling the clinker. Here movement of the heating medium and the calcined feed in the rotary kiln 208 is in counter current direction.

The cement rotary kiln circuit 200 further comprising, the gas used as the heating medium, comprising at least one of (i) Carbon dioxide (CO2) which is byproduct of the calcination and (ii) one or more inert gases. The gas storage unit 112 comprises a CO2 Storage-Sequestration-Utilization Storage unit 218 for storing the CO2 to be reutilized by the heating medium flow design loop, wherein the excess CO2 is sent for sequestration for longer term storage or utilization. Further, the plurality of electric gas heaters 104A-N comprising a first electric gas heater (214A) and a second electric gas heater 214B. The cement rotary kiln circuit 200 further comprising the plurality of gas cleaning units 110 comprising a first gas cleaner (212A), a second gas cleaner 212B and a third gas cleaner 212C using a cyclone separator.

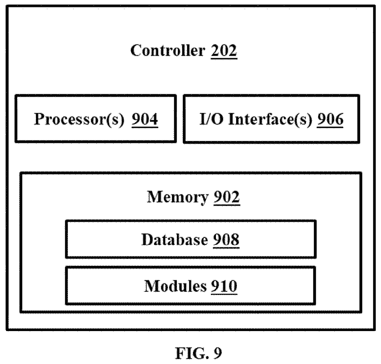

The cement rotary kiln circuit 200 further comprises a controller 202, depicted in FIG. 9. The controller 202 is configured by instructions to control the temperature of the heating medium to a plurality of predefined temperatures via the first electric gas heater 214A and the second electric gas heater 214B. Further, the controller 202 is configured to control a flow rate or pressure of the heating medium when the heating medium is discharged through the one or more preheaters 204, the pre-calciner 206, and the rotary kiln 208 in accordance with the heating medium flow design loop. The control of the flowrate or the pressure is performed through operations of fans or blowers or compressors (not shown) in the heating medium flow design loop.

The heating medium flow design loop execution comprising:
a) Obtaining an initial quantity of the heating medium from the CO2 Storage-Sequestration-Utilization Storage unit 218.
b) Purifying the heating medium at a first gas cleaner 212A. As mentioned earlier, this step of adding a purifier prior to cooling is a minimal design change specific to cement manufacturing process.
c) Circulating heating medium through the cooler 210 to raise the temperature of the heating medium to an initial temperature via heat absorption of the heating medium from the clinker.
d) Purifying the heating medium at the initial temperature via a second gas cleaner 212B to filter out impurities.
e) Heating the purified heating medium to a first temperature via a first electric gas heater 214) controlled by the controller 202 and discharging the heated heating medium into the rotary kiln 208 with a first flow rate controlled by the controller 202. The clinkerization utilizes heat of the heated heating medium and releases the byproduct after reactions thereby increasing the quantity and decreasing the temperature of the heating medium exiting the rotary kiln 208.
f) Reheating the exited heating medium, post purifying through the third gas cleaner 212C, to a second temperature via the second electric gas heater 214B controlled by the controller 202. The reheated heating medium is fed to the pre-calciner 206 for the calcination with a second flow rate controlled by the controller 202.
g) Discharging the heating medium generated at the pre-calciner 206 to the one or more preheaters 204 for preheating the raw meal feed, wherein the heating medium exiting the one or more preheaters 204 is passed through an electrostatic precipitator (216) to filter out solid particles from the CO2 while the heating medium is exiting the one or more preheaters 204.
h) Storing excess byproduct in the CO2 Storage-Sequestration-Utilization Storage unit 218 prior to recirculating the byproduct to the first gas purifier 212A for iteratively executing the heating medium flow design loop.

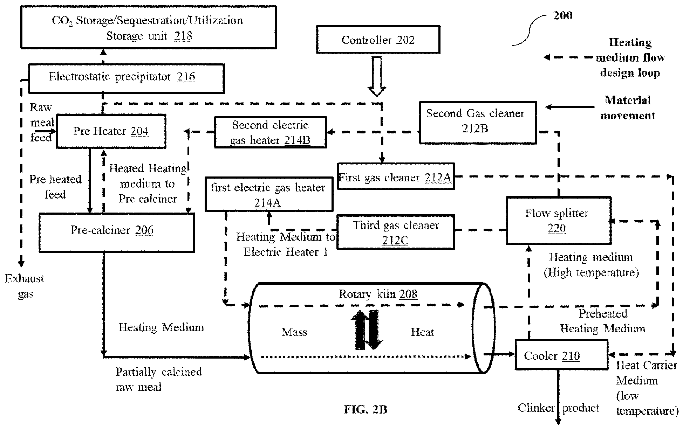

FIG. 2B is the system 100 depicting the cement clinker circuit 200 for electrically heated gas mixture mediated industrial plant processes for the cement manufacturing plant in a cocurrent mode operation, in accordance with some embodiments of the present disclosure. Here movement of the heating medium and the calcined feed in the rotary kiln 208 is in cocurrent direction. The cocurrent mode operation comprises setting movement of the heating medium and the calcined feed in the rotary kiln (208) in cocurrent direction, wherein heating medium exiting the rotary kiln 208 is mixed with another stream of the heating medium coming from (i) the cooler 210 after preheating, and it is split via a flow splitter 220. A first split portion of the heating medium is sent back to the rotary kiln 208 post performing gas purification and reheating. A second spilt portion of the heating medium is sent to second gas cleaner 212B followed by post heating to the second predefined temperature to the pre-calciner 206.

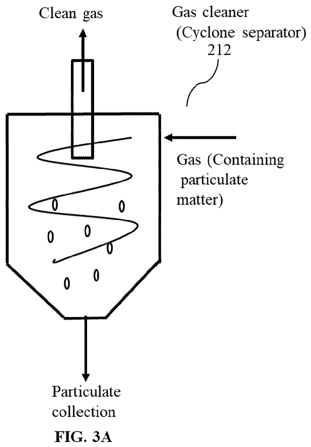

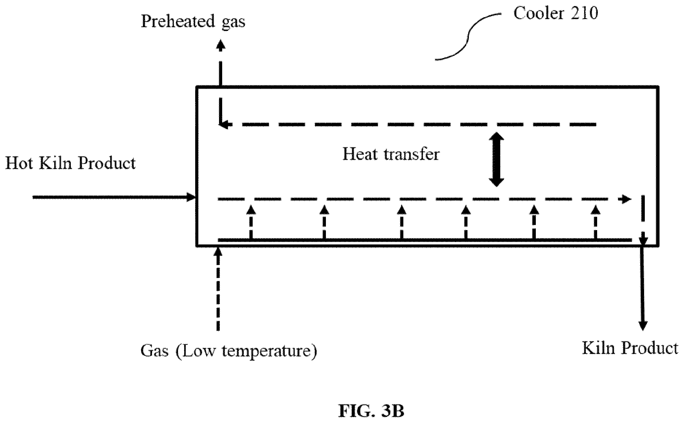

As depicted in FIG. 3A, the cyclone separator includes a vertical cylinder with conical bottom and a vertex finder. The heating medium enters the cyclone separator tangentially near the top of the cylinder. As the fluid spirals down the cylindrical and conical sections, gaseous components move upwards, exiting through the vortex finder. The solid particles move in the radial direction as they experience greater centrifugal acceleration and exit as underflow. The cleaned heating medium is sent to the next corresponding units by the gas cleaners 212A-C, to the cooler 210 and electric gas heaters 114A-B in the circuit. As depicted in FIG. 3B, the cooler unit 210, which is a grate reciprocating cooler, includes a series of fixed and movable grate plates with an inlet and outlet for the gas streams. The movable grate plates between the fixed plates are driven by the transmission devices and are responsible for the forwarding motion of clinker (clinker product). The heating medium is blown from the bottom of the clinker bed to cool the hot clinker. The exhaust gas from the cooler is heated further in the electric heaters 214A-B to the desired temperatures. The exit gas from the first electric heater 214A is directed to the rotary kiln 208 while the exit gas from the second electric heater 214B is directed to the pre-calciner 206.

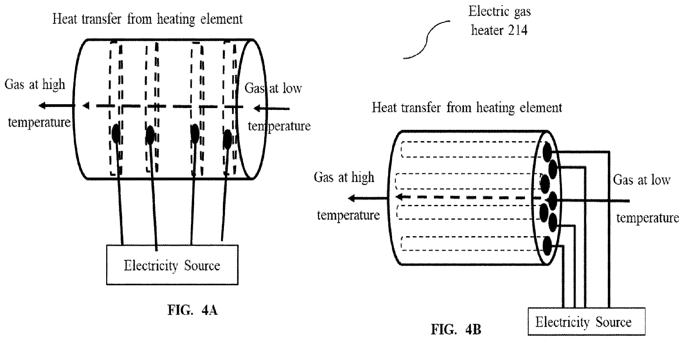

As depicted in FIG. 4A and 4B, the electric gas heater unit 214 (214A-B) include heating elements in the shape of a coil or straight tube, an arrangement for electric supply, an inlet, and an exit for the gas stream. The electricity is given to the heating elements and the heating elements in turn pass the heat to the heating medium making it reach the desired temperature. The heat is transferred to the heat carrier primarily by convection and radiation heat transfer modes. The heating medium from the cooler unit is fed into the electric gas heater units 214A-B as input, and the heated medium at high temperature, from the first electric heater 214A is fed to the rotary kiln unit 110 and from the second electric gas heater 114B to the pre-calciner unit 206 for further use. In conventional cement kilns, the overall heat load in the process of clinker production in the cement industries is approximately 240 KJ/ kg of clinker comes from electricity and remaining from fossil fuels. However, the cement clinker circuit disclosed herein, the load from the fossil fuels is replaced by the heating medium which is heated by electricity generated from the renewable energy sources such as solar energy. This electricity generated is used to run the electric gas heater units 214A-B, which increase the temperature of the heating medium to supply the heat in rotary kiln and pre-calciner unit operations. A sample heat load calculations for electric heaters in a cement rotary circuit are given in Table 1, using CO2 gas as the heating medium in the system 100. Same values are also depicted in FIG. 1A.

**Table 1**

| **S. No** | **Description** | **Pre-calciner** | **Heater 2** | **Rotary kiln** | **Heater 1** | **Cooler** |
|---|---|---|---|---|---|---|
| **1** | Solid material inlet temperature, K | 1070 | - | 1214 | - | 1632 |
| **2** | Solid material inlet flow rate, Kg/s | 50 | - | 38.22 | - | 32.41 |
| **3** | Heat carrier medium inlet temperature, K | 1888 | 1217 K from cooler and 1250 K from rotary | 1923 | 1217 | 300 |
| **4** | Heat carrier medium outlet temperature, K | 1224 | 1888 | 1250 | 1923 | 1217 |
| **5** | Heat carrier medium inlet flowrate, Kg/s | 50.8 | 50.8 | 30 | 30 | 45 |
| **6** | Heat carrier medium outlet flowrate, Kg/s | 62.89 | 50.8 | 35.8 | 30 | 45 |
| **7** | Heat load on the unit (Specially on electric heaters) | - | 50-60 MW/ (1543-1852 KJ/ Kg clinker | - | 14-38 MW/ (431 - 1173 KJ/ kg clinker) | - |

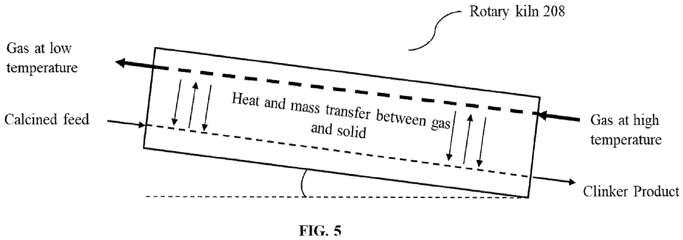

To provide the 1124 kJ/kg of clinker heat load on the first electric gas heater 214A, it is estimated that required heating area is 160 m2. This can be achieved by five electric heaters having a one-meter length of heating elements and can be arranged according to the shown configuration in FIGS. 4A. For the second electric gas heater 214B, as seen in FIG. 4B, this load is 1769 kJ/kg of clinker and that can also be achieved by the same type of configuration with more heaters in series compared to the first electric gas heater 214A. The first electric gas heater 214A provides the heat requirement for the rotary kiln 208 and second electric gas heater 214B provides the heat requirement for pre-calciner unit 106. As depicted in FIG. 5, the rotary kiln unit 208 includes a cylindrical drum, inlets, and exits ports for the calcined feed and clinker. In the traditional case of counter-current flow, partially calcined material is fed from one end and high-temperature gas is injected from another end of the drum to achieve the process reactions. Alternately, the cocurrent mode, may be adopted in cement plant processes, as depicted in FIG. 2B, where both feed material and heating medium have cocurrent flow and are fed from the same end and leave from another end. Thus, the cement clinker circuit 200 caters to both types of rotary kilns 208 setups used in the cement industry. The clinkerization reactions occurs in the rotary kiln 208 as the materials move from one end to another end. The hot gas from one end provides the energy required for the process reactions primarily through radiation, convection, and conduction heat transfer (some of it through the refractory linings of the kiln). As solids move in the rotary kiln 208 they receive the necessary heat from the heating medium, interchangeably referred to as heat carrier medium, further sharing mass with it in the form of CO2 liberated from limestone and volatiles from the solids. The clinker product is discharged from the rotary kiln unit 208 and sent to the cooler unit 210 when all process reaction is completed to the required product compositions as shown in FIG. 5. The heating medium from the rotary kiln unit 208 is sent to electric heater unit followed by the pre-calciner unit in case of counter current. However, the cocurrent mode the output stream is first split and then sent to the pre-calciner unit 206. The heating medium from the rotary kiln unit 208 is sent to the first electric gas heater unit 214A, it is combined at the flow splitter 220 with another stream of heat carrier medium coming from the cooler after preheating, and some portion of overall heating medium after reaching the desired temperature is sent to the pre-calciner unit 206 to heat the solid material and assist the calcination reaction to the required extent. Thus, in FIG. 2B gas from rotary kiln unit 208 first goes into flow splitter 220, where it combines with the gas from cooler 210 then some portion of the combined flow goes into cleaner then into the heater to achieve the desired temperature before entering the rotary kiln unit 208..

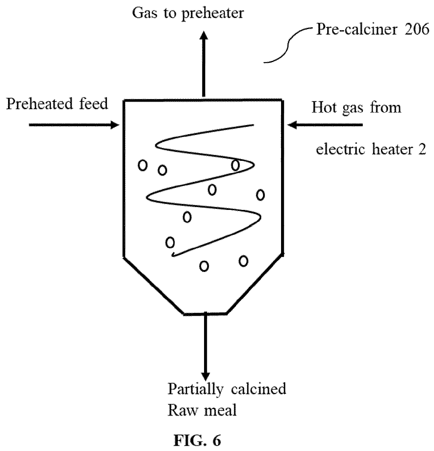

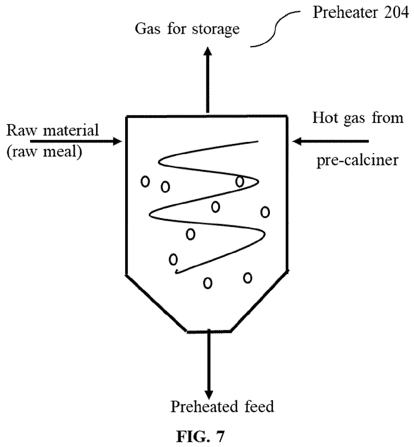

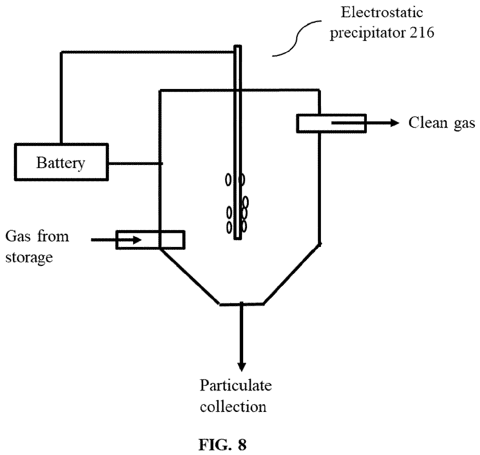

As depicted in FIG. 6, the pre-calciner unit 206 includes a tank, inlets, and outlet ports for the feed and the product. The pre-calciner unit 106 receives its feed material from the pre-heater(s) unit 204 to calcine the feed material to some extent to reduce the heat load of the rotary kiln 108, thereby reduce the size of the rotary kiln 108, improve the production efficiency. The feed material receives the necessary heat from the heat carrier medium, fed to the pre-calciner unit 106 from the rotary kiln unit 108 and the cooler 110 as shown in FIG. 6. The heat carrier medium from the pre-calciner 106 outlet is used to preheat the solid material in the one or more preheaters 204. As depicted in FIG. 7, the one or more preheaters 204 include two inlets and two outlet ports. These are essentially gas cyclones used as heat exchangers. The raw material is fed to the unit tangentially along with the heating medium exiting the pre-calciner 106. The heat transfer happens between gas and solid material as shown in FIG. 7. The gas stream leaves the preheater 204 through vortex finder. Typically, there are five to six preheaters that are arranged in series, located one on top of the other, are used. While the solids travels downwards from one preheater to another and finally to the pre-calciner 206, the gas stream travels to the earlier stage of preheater. The gas stream that is exiting the first preheater is sent to the gas separator unit where CO2 gas separated from dust and other gases (when a gas mixture is used). A major part of the gas stream is recycled back to the cooler 210 to act as the heating medium. A portion of is recovered and sent to the storage unit 118 for CO2 sequestration/storage units after passing through an electrostatic precipitator (ESP) unit. As depicted in FIG. 8, the electrostatic precipitator (ESP) unit includes gas distribution plates, discharge electrodes, collection surfaces (either plates or pipes), and rappers. The gas distribution plates maintain the flow distribution of the input gas, and the discharge electrode is divided into electric fields depending on the ESP capacity and energized by the set power supply, these discharge electrodes generate the ions which collide with the particles present in the gas and apply an electrical charge to them. The charged dust particles are collected on the collection surface and rappers are used to remove the dust particles from the collection surface. The clean gas leaves the circuit as shown in FIG. 8.

FIG. 9 is a functional block diagram of the controller 202 that controls the temperature, pressure, or the flow rate of the heating medium of cement clinker circuit 200, in accordance with some embodiments of the present disclosure.

In an embodiment, the controller 202 includes a processor(s) 904, communication interface device(s), alternatively referred as input/output (I/O) interface(s) 906, and one or more data storage devices or a memory 902 operatively coupled to the processor(s) 904. The controller 102 with one or more hardware processors is configured to execute functions of one or more functional blocks of the controller 202.

Referring to the components of controller 202, in an embodiment, the processor(s) 904, can be one or more hardware processors 904. In an embodiment, the one or more hardware processors 904 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 904 are configured to fetch and execute computer-readable instructions stored in the memory 902. In an embodiment, the controller 202 can be implemented in a variety of computing systems including laptop computers, notebooks, hand-held devices such as mobile phones, workstations, mainframe computers, servers, and the like.

The I/O interface(s) 906 can include a variety of software and hardware interfaces, for example, a web interface, a graphical user interface to display the heating medium temperature and flow rates acquired via a set of sensors monitoring the process of the system 100. The I/O interface 906 can facilitate multiple communications within a wide variety of networks N/W and protocol types, including wired networks, for example, LAN, cable, etc., and wireless networks, such as WLAN, cellular and the like. In an embodiment, the I/O interface (s) 906 can include one or more ports for connecting to a number of external devices or to another server or devices.

The memory 902 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 902 includes a plurality of modules 910 such as modules for temperature, flow monitoring of the heating medium. The plurality of modules 910 further include programs or coded instructions that supplement applications or functions performed by the controller 202 for executing different steps involved in the process of the inert gas based direct heating for the industrial plant process, being performed by the controller 202. The plurality of modules 810, amongst other things, can include routines, programs, objects, components, and data structures, which performs particular tasks or implement particular abstract data types. The plurality of modules 210 may also be used as, signal processor(s), node machine(s), logic circuitries, and/or any other device or component that manipulates signals based on operational instructions. Further, the plurality of modules 810 can be used by hardware, by computer-readable instructions executed by the one or more hardware processors 904, or by a combination thereof.

Further, the memory 902 may comprise information pertaining to input(s)/output(s) of each step performed by the processor(s) 904 of the controller 202 and methods of the present disclosure. Further, the memory 902 includes a database 908. The database (or repository) 908 may include a plurality of abstracted piece of code for refinement and data that is processed, received, or generated as a result of the execution of the plurality of modules in the module(s) 910.

Although the data base 908 is shown internal to the controller 202, it will be noted that, in alternate embodiments, the database 908 can also be implemented external to the controller 202, and communicatively coupled to the controller 202. The data contained within such external database may be periodically updated. For example, new data may be added into the database (not shown in FIG. 9) and/or existing data may be modified and/or non-useful data may be deleted from the database. In one example, the data may be stored in an external system, such as a Lightweight Directory Access Protocol (LDAP) directory and a Relational Database Management System (RDBMS).

The controller 202 configured by the instructions to control the temperature of the heating medium to the plurality of predefined temperatures via the first electric gas heater (214A) and the second electric gas heater (214B). Further is configured to control the flow rate or the pressure of the heating medium when the heating medium is discharged through the one or more preheaters 204, the pre-calciner 206, and the rotary kiln 208 in accordance with the heating medium flow design loop, wherein control of the flowrate or the pressure is performed through operations of fans or blowers in the heating medium flow design loop.

The written description describes the subject matter herein to enable any person skilled in the art to make and use the embodiments.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for fossil fuel free heating in a cement manufacturing plant, the method comprising:
obtaining a product by processing a raw material at a process equipment (102), wherein heat required for processing the raw material is derived from a gas used as a heating medium, wherein the gas is heated electrically to a predefined temperature, wherein the heat from the gas is transferred directly to the raw material through direct contact, wherein the gas is chemically inactive or participating in the reactions during processing of the raw material, and wherein the gas is at least one of: (i) involved in the processing of the raw material as a reactant and/or a byproduct, and (ii) an externally introduced stable gas, or a gas mixture thereof;
heating the gas to the predefined temperature at a plurality of electric gas heaters (104A-N), powered with electricity source, where preheating of the gas is performed at a heat recovery unit (106), wherein the heat released by the heat recovery unit during cooling of the product exiting the processing equipment is utilized to raise temperature of the gas, and wherein a heating medium flow design loop comprising of the plurality of electric gas heaters reutilizes the heat carrying capacity of the gas by recirculation and eliminates need for storing heat energy from the gas;
cleaning the gas before entering the plurality of electric gas heaters (104A-N) at a plurality of gas cleaning units (114A-N);
recovering the gas, at an optional gas recovery unit (108), exiting the processing equipment followed by a gas separator (110) to separate out solid particles before venting out non-harmful gases to the environment; and
storing the gas exiting the gas separator (110) at a gas storage unit (112), wherein the stored gas is recirculated as a heating medium in the heating medium flow design loop and excess gas is forwarded for sequestration for longer term storage or utilization.

2. The method as claimed in claim 1, wherein
obtaining a preheated feed from the raw material comprising a raw meal feed entering the one or more preheaters at a gas recovery unit (108) of the processing equipment (102), functioning as the one or more preheaters (204);
obtaining a partially calcined raw meal by performing calcination of the preheated feed at a pre-calciner (206) of the processing equipment (102);
obtaining the product in the form of a clinker from the partially calcined raw meal by performing clinkerization at a rotary kiln (208) of the processing equipment (102); and
obtaining the product in form of a clinker product by cooling the clinker at a heat recovery unit (106) in form of a cooler (210),
wherein the gas used as the heating medium comprising at least one of (i) Carbon dioxide (CO2) which is the byproduct of the calcination and (ii) one or more inert gases;
storing the CO2 to be reutilized by the heating medium flow design loop at the gas storage unit (112) comprising a CO2 Storage-Sequestration-Utilization Storage unit (218), wherein the excess CO2 is sent for sequestration for longer term storage or utilization,
wherein the plurality of electric gas heaters (104A-N) comprising a first electric gas heater (214A) and a second electric gas heater (214B), and
wherein the plurality of gas cleaning units (110) comprising a first gas cleaner (212A), a second gas cleaner (212B) and a third gas cleaner (212C) using a cyclone separator; and a controller (202) comprising: a memory (902) storing instructions; one or more Input/Output (I/O) interfaces (906); and one or more hardware processors (904) coupled to the memory (902) via the one or more I/O interfaces (906), wherein the one or more hardware processors (904) are configured by the instructions to:
controlling, via one or more hardware processors (904), of the controller (202), the temperature of the heating medium to a plurality of predefined temperatures via the first electric gas heater (214A) and the second electric gas heater (214B), and control a flow rate or pressure of the heating medium when the heating medium is discharged through the one or more preheaters (204), the pre-calciner (206), and the rotary kiln (208) in accordance with the heating medium flow design loop, wherein control of the flowrate or the pressure is performed through operations of fans, compressors or blowers in the heating medium flow design loop.

3. The method as claimed in claim 2, wherein the heating medium flow design loop execution comprising:
obtaining an initial quantity of the heating medium from the CO2 Storage-Sequestration-Utilization Storage unit (218);
purifying the heating medium at the first gas cleaner (212A);
circulating heating medium through the cooler (210) to raise the temperature of the heating medium to an initial temperature via heat absorption of the heating medium from the clinker;
purifying the heating medium at the initial temperature via the second gas cleaner (212B) to filter out impurities;
heating the purified heating medium to a first temperature via the first electric gas heater (214A) controlled by the controller (202) and discharging the heated heating medium into the rotary kiln (208) with a first flow rate controlled by the controller (202), wherein the clinkerization utilizes heat of the heated heating medium and releases the byproduct after reactions thereby increasing the quantity and decreasing the heat of the heating medium exiting the rotary kiln (208);
reheating the exited heating medium, post purifying through the third gas cleaner (212C), to a second temperature via the second electric gas heater controlled by the controller, wherein the reheated heating medium is fed to the pre-calciner (206) for the calcination with a second flow rate controlled by the controller;
discharging the heating medium generated at the pre-calciner (206) to the one or more preheaters (204) for preheating the raw meal feed, wherein the heating medium exiting a first preheater among the one or more preheaters (204) is passed through an electrostatic precipitator (216) to filter out solid particles from the CO2 before venting out non-harmful gases to the environment while the heating medium is exiting the one or more preheaters (204); and
storing excess byproduct in the CO2 Storage-Sequestration-Utilization Storage unit (218) prior to recirculating the byproduct to the first gas purifier (212A) for iteratively executing the heating medium flow design loop.

4. The method as claimed in claim 3, wherein movement of the heating medium and the calcined feed in the rotary kiln (208) is in counter current direction.

5. The method as claimed in claim 2, comprises setting movement of the heating medium and the calcined feed in the rotary kiln (208) in cocurrent direction,
wherein heating medium exiting the rotary kiln (208) is mixed with another stream of the heating medium coming from (i) the cooler (210) after preheating, and is split via a flow splitter (220),
wherein a first split portion of the heating medium is sent back to the rotary kiln (208) post performing gas purification and reheating, and
wherein a second spilt portion of the heating medium is sent to the second gas cleaner (212B) followed by post heating to the second predefined temperature to the pre-calciner (206).

## Patentansprüche

1. Verfahren zum Heizen ohne fossile Brennstoffe in einer Zementherstellungsanlage, wobei das Verfahren umfasst:
Erhalten eines Produkts durch Verarbeiten eines Rohmaterials in einer Verarbeitungseinrichtung (102), wobei Wärme, die zum Verarbeiten des Rohmaterials erforderlich ist, von einem Gas abgeleitet wird, das als Heizmedium verwendet wird, wobei das Gas elektrisch auf eine vordefinierte Temperatur erhitzt wird, wobei die Wärme von dem Gas durch direkten Kontakt direkt auf das Rohmaterial übertragen wird, wobei das Gas chemisch inaktiv ist oder an den Reaktionen während der Verarbeitung des Rohmaterials beteiligt ist, und wobei das Gas mindestens eines von: (i) an der Verarbeitung des Rohmaterials als Reaktant und/oder Nebenprodukt beteiligt ist, und (ii) ein extern eingeführtes stabiles Gas oder ein Gasgemisch davon ist;
Erhitzen des Gases auf die vordefinierte Temperatur in einer Mehrzahl von elektrischen Gasheizvorrichtungen (104A-N), die mit einer Stromquelle betrieben werden, wobei das Vorheizen des Gases in einer Wärmerückgewinnungseinheit (106) durchgeführt wird, wobei die Wärme, die durch die Wärmerückgewinnungseinheit während des Kühlens des Produkts, das die Verarbeitungseinrichtung verlässt, freigesetzt wird, verwendet wird, um die Temperatur des Gases zu erhöhen, und wobei eine Heizmediumströmungsauslegungsschleife, die die Mehrzahl von elektrischen Gasheizvorrichtungen umfasst, die Wärmeübertragungskapazität des Gases durch Rückführung wiederverwendet und den Bedarf zum Speichern von Wärmeenergie aus dem Gas eliminiert;
Reinigen des Gases vor dem Eintreten in die Mehrzahl von elektrischen Gasheizvorrichtungen (104A-N) in einer Mehrzahl von Gasreinigungseinheiten (114A-N);
Rückgewinnen des Gases in einer optionalen Gasrückgewinnungseinheit (108), das die Verarbeitungseinrichtung verlässt, gefolgt von einem Gasabscheider (110), um feste Partikel abzuscheiden, bevor nicht schädliche Gase an die Umgebung abgelassen werden; und
Speichern des Gases, das den Gasabscheider (110) verlässt, in einer Gasspeichereinheit (112), wobei das gespeicherte Gas als Heizmedium in der Heizmediumströmungsauslegungsschleife zurückgeführt wird und überschüssiges Gas zur Sequestrierung für eine längerfristige Speicherung oder Verwendung weitergeleitet wird.

2. Verfahren nach Anspruch 1, wobei
Erhalten einer vorgeheizten Beschickung aus dem Rohmaterial, das eine Rohmehlbeschickung umfasst, die in die eine oder die mehreren Vorheizvorrichtungen in einer Gasrückgewinnungseinheit (108) der Verarbeitungseinrichtung (102) eintritt, die als die eine oder die mehreren Vorheizvorrichtungen (204) fungiert;
Erhalten eines teilweise kalzinierten Rohmehls durch Durchführen einer Kalzinierung der vorgeheizten Beschickung in einer Vorkalzinierungsvorrichtung (206) der Verarbeitungseinrichtung (102);
Erhalten des Produkts in der Form eines Klinkers aus dem teilweise kalzinierten Rohmehl durch Durchführen einer Klinkerisierung in einem Drehrohrofen (208) der Verarbeitungseinrichtung (102); und
Erhalten des Produkts in der Form eines Klinkerprodukts durch Kühlen des Klinkers in einer Wärmerückgewinnungseinheit (106) in der Form eines Kühlers (210),
wobei das Gas, das als das Heizmedium verwendet wird, mindestens eines von (i) Kohlendioxid (CO2), das das Nebenprodukt der Kalzinierung ist, und (ii) einem oder mehreren Inertgasen umfasst;
Speichern des CO2, das durch die Heizmediumströmungsauslegungsschleife wiederverwendet werden soll, in der Gasspeichereinheit (112), die eine CO2-Speicherung-Sequestrierung-Verwendung-Speichereinheit (218) umfasst, wobei das überschüssige CO2 zur Sequestrierung für eine längerfristige Speicherung oder Verwendung geschickt wird,
wobei die Mehrzahl von elektrischen Gasheizvorrichtungen (104A-N) eine erste elektrische Gasheizvorrichtung (214A) und eine zweite elektrische Gasheizvorrichtung (214B) umfasst, und
wobei die Mehrzahl von Gasreinigungseinheiten (110) eine erste Gasreinigungsvorrichtung (212A), eine zweite Gasreinigungsvorrichtung (212B) und eine dritte Gasreinigungsvorrichtung (212C) unter Verwendung eines Zyklonabscheiders umfasst; und eine Steuerung (202), die Folgendes umfasst: einen Speicher (902), der Anweisungen speichert; eine oder mehrere Eingabe/Ausgabe(E/A)-Schnittstellen (906); und einen oder mehrere Hardwareprozessoren (904), die mit dem Speicher (902) über die eine oder die mehreren E/A-Schnittstellen (906) gekoppelt sind, wobei der eine oder die mehreren Hardwareprozessoren (904) durch die Anweisungen konfiguriert sind zum:
Steuern, über einen oder mehrere Hardwareprozessoren (904) der Steuerung (202), der Temperatur des Heizmediums auf eine Mehrzahl von vordefinierten Temperaturen über die erste elektrische Gasheizvorrichtung (214A) und die zweite elektrische Gasheizvorrichtung (214B), und Steuern einer Strömungsrate oder eines Drucks des Heizmediums, wenn das Heizmedium durch die eine oder die mehreren Vorheizvorrichtungen (204), die Vorkalzinierungsvorrichtung (206) und den Drehrohrofen (208) gemäß der Heizmediumströmungsauslegungsschleife abgegeben wird, wobei die Steuerung der Strömungsrate oder des Drucks durch Betriebe von Ventilatoren, Kompressoren oder Gebläsen in der Heizmediumströmungsauslegungsschleife durchgeführt wird.

3. Verfahren nach Anspruch 2, wobei die Ausführung der Heizmediumströmungsauslegungsschleife Folgendes umfasst:
Erhalten einer Anfangsmenge des Heizmediums von der CO2-Speicherung-Sequestrierung-Verwendung-Speichereinheit (218);
Reinigen des Heizmediums in der ersten Gasreinigungsvorrichtung (212A);
Zirkulieren des Heizmediums durch den Kühler (210), um die Temperatur des Heizmediums auf eine Anfangstemperatur über Wärmeabsorption des Heizmediums aus dem Klinker zu erhöhen;
Reinigen des Heizmediums bei der Anfangstemperatur über die zweite Gasreinigungsvorrichtung (212B), um Verunreinigungen herauszufiltern;
Erhitzen des gereinigten Heizmediums auf eine erste Temperatur über die erste elektrische Gasheizvorrichtung (214A), die durch die Steuerung (202) gesteuert wird, und Abgeben des erhitzten Heizmediums in den Drehrohrofen (208) mit einer ersten Strömungsrate, die durch die Steuerung (202) gesteuert wird, wobei die Klinkerisierung Wärme des erhitzten Heizmediums verwendet und das Nebenprodukt nach Reaktionen freisetzt, wodurch die Menge des Heizmediums, das den Drehrohrofen (208) verlässt, erhöht und die Wärme desselben verringert wird;
Wiedererhitzen des verlassenen Heizmediums nach dem Reinigen durch die dritte Gasreinigungsvorrichtung (212C) auf eine zweite Temperatur über die zweite elektrische Gasheizvorrichtung, die durch die Steuerung gesteuert wird, wobei das wiedererhitzte Heizmedium der Vorkalzinierungsvorrichtung (206) für die Kalzinierung mit einer zweiten Strömungsrate, die durch die Steuerung gesteuert wird, zugeführt wird;
Abgeben des Heizmediums, das in der Vorkalzinierungsvorrichtung (206) erzeugt wird, an die eine oder die mehreren Vorheizvorrichtungen (204) zum Vorheizen der Rohmehlbeschickung, wobei das Heizmedium, das eine erste Vorheizvorrichtung unter der einen oder den mehreren Vorheizvorrichtungen (204) verlässt, durch einen elektrostatischen Abscheider (216) geleitet wird, um feste Partikel aus dem CO2 herauszufiltern, bevor nicht schädliche Gase an die Umgebung abgelassen werden, während das Heizmedium die eine oder die mehreren Vorheizvorrichtungen (204) verlässt; und
Speichern des überschüssigen Nebenprodukts in der CO2-Speicherung-Sequestrierung- Verwendung-Speichereinheit (218) vor dem Rückführen des Nebenprodukts zu der ersten Gasreinigungsvorrichtung (212A) zum iterativen Ausführen der Heizmediumströmungsauslegungsschleife.

4. Verfahren nach Anspruch 3, wobei die Bewegung des Heizmediums und der kalzinierten Beschickung in dem Drehrohrofen (208) in Gegenstromrichtung erfolgt.

5. Verfahren nach Anspruch 2, das das Einstellen der Bewegung des Heizmediums und der kalzinierten Beschickung in dem Drehrohrofen (208) in Gleichstromrichtung umfasst,
wobei das Heizmedium, das den Drehrohrofen (208) verlässt, mit einem anderen Strom des Heizmediums gemischt wird, der nach dem Vorheizen von (i) dem Kühler (210) kommt, und über einen Strömungsteiler (220) geteilt wird,
wobei ein erster geteilter Teil des Heizmediums nach dem Durchführen der Gasreinigung und des Wiedererhitzens zurück zu dem Drehrohrofen (208) geschickt wird, und
wobei ein zweiter geteilter Teil des Heizmediums zu der zweiten Gasreinigungsvorrichtung (212B) geschickt wird, gefolgt von dem Wiedererhitzen auf die zweite vordefinierte Temperatur zu der Vorkalzinierungsvorrichtung (206).

## Revendications

1. Procédé de chauffage sans combustible fossile dans une usine de fabrication de ciment, le procédé comprenant :
l'obtention d'un produit par traitement d'une matière première au niveau d'un équipement de traitement (102), dans lequel la chaleur requise pour le traitement de la matière première est dérivée d'un gaz utilisé en tant que milieu chauffant, dans lequel le gaz est chauffé électriquement à une température prédéfinie, dans lequel la chaleur provenant du gaz est transférée directement à la matière première par contact direct, dans lequel le gaz est chimiquement inactif ou participe aux réactions pendant le traitement de la matière première, et dans lequel le gaz est au moins l'un parmi : (i) impliqué dans le traitement de la matière première en tant que réactif et/ou sous-produit, et (ii) un gaz stable introduit de l'extérieur, ou un mélange gazeux de ceux-ci ;
le chauffage du gaz à la température prédéfinie au niveau d'une pluralité de dispositifs de chauffage de gaz électriques (104A-N), alimentés avec une source d'électricité, où le préchauffage du gaz est effectué au niveau d'une unité de récupération de chaleur (106), dans lequel la chaleur libérée par l'unité de récupération de chaleur pendant le refroidissement du produit sortant de l'équipement de traitement est utilisée pour élever la température du gaz, et dans lequel une boucle de conception d'écoulement de milieu chauffant comprenant la pluralité de dispositifs de chauffage de gaz électriques réutilise la capacité de transport de chaleur du gaz par recirculation et élimine le besoin de stocker l'énergie thermique provenant du gaz ;
le nettoyage du gaz avant d'entrer dans la pluralité de dispositifs de chauffage de gaz électriques (104A-N) au niveau d'une pluralité d'unités de nettoyage de gaz (114A-N)
la récupération du gaz, au niveau d'une unité de récupération de gaz facultative (108), sortant de l'équipement de traitement suivie par un séparateur de gaz (110) pour séparer les particules solides avant d'évacuer les gaz non nocifs vers l'environnement ; et
le stockage du gaz sortant du séparateur de gaz (110) au niveau d'une unité de stockage de gaz (112), dans lequel le gaz stocké est remis en circulation en tant que milieu chauffant dans la boucle de conception d'écoulement de milieu chauffant et le gaz en excès est transféré pour une séquestration pour un stockage ou une utilisation à plus long terme.

2. Procédé selon la revendication 1, dans lequel
l'obtention d'une alimentation préchauffée à partir de la matière première comprenant une alimentation de farine brute entrant dans les un ou plusieurs dispositifs de préchauffage au niveau d'une unité de récupération de gaz (108) de l'équipement de traitement (102), fonctionnant comme les un ou plusieurs dispositifs de préchauffage (204)
l'obtention d'une farine brute partiellement calcinée en effectuant la calcination de l'alimentation préchauffée au niveau d'un dispositif de précalcination (206) de l'équipement de traitement (102) ;
l'obtention du produit sous la forme d'un clinker à partir de la farine brute partiellement calcinée en effectuant une clinkérisation au niveau d'un four rotatif (208) de l'équipement de traitement (102) ; et
l'obtention du produit sous la forme d'un produit de clinker en refroidissant le clinker au niveau d'une unité de récupération de chaleur (106) sous la forme d'un refroidisseur (210),
dans lequel le gaz utilisé comme milieu de chauffage comprend au moins l'un parmi (i) le dioxyde de carbone (CO2) qui est le sous-produit de la calcination et (ii) un ou plusieurs gaz inertes ;
le stockage du CO2 à réutiliser par la boucle de conception d'écoulement de milieu chauffant au niveau de l'unité de stockage de gaz (112) comprenant une unité de stockage - séquestration - utilisation de CO2 (218), dans lequel le CO2 en excès est envoyé pour une séquestration pour un stockage ou une utilisation à plus long terme,
dans lequel la pluralité de dispositifs de chauffage de gaz électriques (104A-N) comprend un premier dispositif de chauffage de gaz électrique (214A) et un deuxième dispositif de chauffage de gaz électrique (214B), et
dans lequel la pluralité d'unités de nettoyage de gaz (110) comprend un premier dispositif de nettoyage de gaz (212A), un deuxième dispositif de nettoyage de gaz (212B) et un troisième dispositif de nettoyage de gaz (212C) utilisant un séparateur cyclonique ;
et un dispositif de commande (202) comprenant : une mémoire (902) stockant des instructions ; une ou plusieurs interfaces d'entrée/sortie (I/O) (906) ; et un ou plusieurs processeurs matériels (904) couplés à la mémoire (902) via les une ou plusieurs interfaces I/O (906), dans lequel les un ou plusieurs processeurs matériels (904) sont configurés par les instructions pour :
commander, via un ou plusieurs processeurs matériels (904), du dispositif de commande (202), la température du milieu chauffant à une pluralité de températures prédéfinies via le premier dispositif de chauffage de gaz électrique (214A) et le deuxième dispositif de chauffage de gaz électrique (214B), et commander un débit ou une pression du milieu chauffant lorsque le milieu chauffant est déchargé à travers les un ou plusieurs dispositifs de préchauffage (204), le dispositif de précalcination (206), et le four rotatif (208) conformément à la boucle de conception d'écoulement de milieu chauffant, dans lequel la commande du débit ou de la pression est effectuée par des opérations de ventilateurs, compresseurs ou soufflantes dans la boucle de conception d'écoulement de milieu chauffant.

3. Procédé selon la revendication 2, dans lequel l'exécution de la boucle de conception d'écoulement de milieu chauffant comprend :
l'obtention d'une quantité initiale du milieu chauffant à partir de l'unité de stockage - séquestration - utilisation de CO2 (218) ;
la purification du milieu chauffant au niveau du premier dispositif de nettoyage de gaz (212A) ;
la circulation du milieu chauffant à travers le refroidisseur (210) pour élever la température du milieu chauffant à une température initiale via l'absorption de chaleur du milieu chauffant à partir du clinker ;
la purification du milieu chauffant à la température initiale via le deuxième dispositif de nettoyage de gaz (212B) pour éliminer par filtration les impuretés ;
le chauffage du milieu chauffant purifié à une première température via le premier dispositif de chauffage de gaz électrique (214A) commandé par le dispositif de commande (202) et la décharge du milieu chauffant chauffé dans le four rotatif (208) avec un premier débit commandé par le dispositif de commande (202), dans lequel la clinkérisation utilise la chaleur du milieu chauffant chauffé et libère le sous-produit après les réactions, augmentant ainsi la quantité et diminuant la chaleur du milieu chauffant sortant du four rotatif (208) ;
le réchauffage du milieu chauffant sorti, après purification à travers le troisième dispositif de nettoyage de gaz (212C), à une deuxième température via le deuxième dispositif de chauffage de gaz électrique commandé par le dispositif de commande, dans lequel le milieu chauffant réchauffé est alimenté au dispositif de précalcination (206) pour la calcination avec un deuxième débit commandé par le dispositif de commande ;
la décharge du milieu chauffant généré au niveau du dispositif de précalcination (206) vers les un ou plusieurs dispositifs de préchauffage (204) pour préchauffer l'alimentation de farine brute, dans lequel le milieu chauffant sortant d'un premier dispositif de préchauffage parmi les un ou plusieurs dispositifs de préchauffage (204) passe à travers un précipitateur électrostatique (216) pour éliminer par filtration les particules solides du CO2 avant d'évacuer les gaz non nocifs vers l'environnement tandis que le milieu chauffant sort des un ou plusieurs dispositifs de préchauffage (204) ; et
le stockage du sous-produit en excès dans l' unité de stockage - séquestration - utilisation de CO2 (218) avant la remise en circulation du sous-produit vers le premier dispositif de purification de gaz (212A) pour exécuter de manière itérative la boucle de conception d'écoulement de milieu chauffant.

4. Procédé selon la revendication 3, dans lequel le mouvement du milieu chauffant et de l'alimentation calcinée dans le four rotatif (208) est dans la direction à contre-courant.

5. Procédé selon la revendication 2, comprenant le réglage du mouvement du milieu chauffant et de l'alimentation calcinée dans le four rotatif (208) dans la direction à co-courant,
dans lequel le milieu chauffant sortant du four rotatif (208) est mélangé avec un autre courant du milieu chauffant provenant (i) du refroidisseur (210) après préchauffage, et est divisé via un diviseur d'écoulement (220),
dans lequel une première partie divisée du milieu chauffant est renvoyée au four rotatif (208) après avoir effectué la purification de gaz et le réchauffage, et
dans lequel une deuxième partie divisée du milieu chauffant est envoyée au deuxième dispositif de nettoyage de gaz (212B) suivie d'un post-chauffage à la deuxième température prédéfinie vers le dispositif de précalcination (206).
